# EUROPEAN PATENT SPECIFICATION

(11) **EP 3 006 131 B1**
(45) Date of publication and mention of the grant of the patent: **24.08.2022**
(21) Application number: 14188561.6
(22) Date of filing: 10.10.2014
(51) Int. Cl.: B21D 35/00, B21D 53/88, B62D 21/00, B62D 25/08, C21D 9/48, B21D 22/02

(54) **Method for manufacturing a rear frame side member for a motor vehicle, rear frame side member manufactured according to such a method, and motor vehicle provided with such a rear frame side member**
Verfahren zur Herstellung eines Heckrahmenseitenelements für ein Kraftfahrzeug, gemäß solch eines Verfahrens hergestelltes Heckrahmenseitenelement und Kraftfahrzeug mit solch einem Heckrahmenseitenelement
Procédé de fabrication d'un élément latéral de carrosserie arrière pour un véhicule automobile, élément latéral fabriqué selon un tel procédé et véhicule automobile équipé d'un tel élément

(43) Date of publication of application: 13.04.2016
(73) Proprietor: Fiat Group Automobiles S.p.A., 10135 Torino (TO) (IT)
(72) Inventor: Peirone, Federico, 10135 Torino (IT); Roman, Filippo, 10135 Torino (IT); Del Nero, Gianfranco, 10135 Torino (IT); Bianco, Sergio, 10135 Torino (IT)
(74) Representative: Lovino, Paolo

(56) References cited:
- EP-A1- 2 228 459
- WO-A1-2006/050688
- WO-A2-2012/156347
- DE-A1-102004 053 258
- US-A- 5 466 033

## Description

The present invention relates to a method for manufacturing a rear frame side member of a vehicle.

As known, the need is felt in vehicles, in case of accident, to prevent cracks and breaks in the fuel tank in order to prevent the leaking of the fuel contained therein, and at the same time to preserve the integrity of the passenger compartment.

Normally, the tanks are made of plastic material and are arranged between two steel side members which are part of a rear frame which supports, at the end thereof, the vehicle rear bumper. In particular, the rear frame comprises some cross members which connect the side members to each other.

Normally, the side members are made by means of cold die forming of steel plates, and they are relatively heavy and/or are reinforced in the areas subjected to increased stresses by welding additional stiffening elements after the die forming, to obtain the rigidity required at the tank.

The need is therefore felt to reduce the weight of the rear frames of the known solutions without compromising the required protection level of the tank and of the passenger compartment and, at the same time, improving the absorption of energy during impact.

US5466033 describes a method that provides welding two panels to each other which are adapted to define a rear structure and a front structure, respectively, and in which the panel of the rear structure has a greater rigidity than the other. The shape of the front and rear structures is obtained by pressing the product that has been obtained by welding. After pressing, a reinforcement element is welded.

EP2228459A corresponds to the preamble of claim 1 and discloses a process for producing a component for a motor vehicle, where the component consists of a first plate and a second plate connected to each other by welding. During the formation, the first plate is hot-formed and press-hardened.

It is the object of the present invention to provide a method for manufacturing a rear frame side member for a vehicle, which allows the above-described needs to be resolved in a simple and affordable manner.

According to the present invention, a method is provided for manufacturing a rear frame side member for a vehicle, as defined in claim 1.

The present invention also relates to a rear frame side member for a vehicle as defined in claim 9 and to a vehicle as defined in claim 11.

To better understand the present invention, a preferred embodiment thereof is now described, by way of a mere non-limiting example, with reference to the accompanying drawings, in which:
- figure 1 is a perspective bottom view, which shows part of a vehicle provided with a pair of side members manufactured according to a preferred embodiment of the method of the present invention;
- figure 2 is a perspective top view, in slightly enlarged scale, of a side member in figure 1;
- figure 3 shows three pieces used to manufacture the side member according to the method of the present invention;
- figure 4 shows a blank obtained in an intermediate step of the method of the present invention;
- figure 5 is a section, on enlarged scale, obtained according to the sectional line V-V in figure 4; and
- figure 6 is a cross section of the side member, after a pressing step of the method of the present invention.

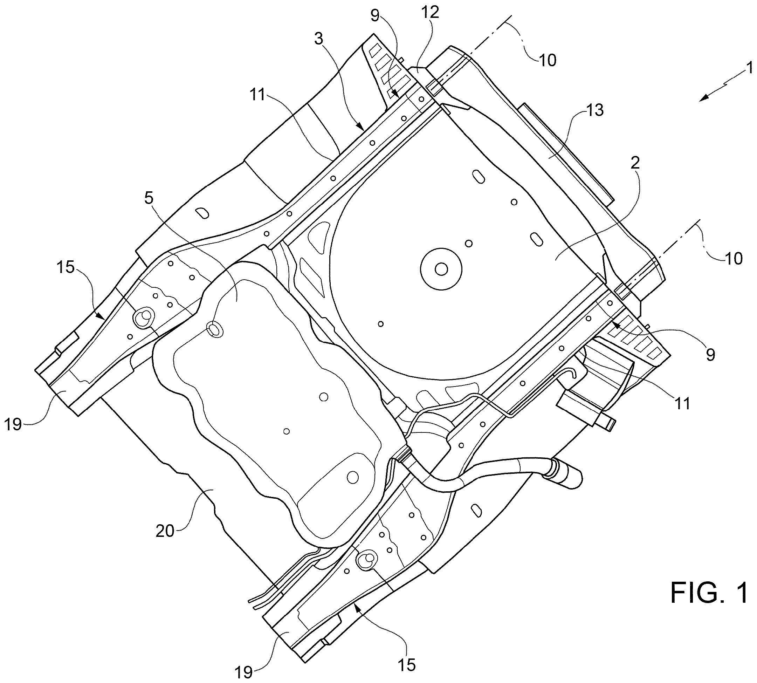

Numeral 1 in figure 1 indicates a vehicle 1 (partly illustrated) as a whole, comprising a load-bearing body, of which, a vehicle floor 2 and a rear frame 3 are depicted.

The vehicle floor 2 defines the floor of a passenger compartment and of a trunk, arranged behind the passenger compartment. On the other hand, frame 3 is arranged under the vehicle floor 2 and supports, in manner not described in detail, a tank 5, which is arranged in a longitudinal position which substantially corresponds to the one of the rear seats (not shown) of the passenger compartment.

Frame 3 is made of metal material, preferably steel, and comprises two side members 9, elongated along respective axes 10 which are substantially parallel to the longitudinal advancing direction of vehicle 1. The side members 9 are arranged on opposite sides of tank 5 and/or of any drive members (not shown) and comprise respective rear segments 11 arranged at the trunk and each having a substantially constant width.

In the case of other types of vehicles, e.g. commercial or industrial vehicles, the segments 11 are arranged at the loading compartment and/or the rear side of the passenger compartment.

The segments 11 have respective rear ends 12, which support a cross member 13, which is part of a rear bumper structure. In particular, the cross member 13 supports a crash absorbing element (not shown) and is connected to the ends 12 by means of absorption structures made of plastic honeycomb material.

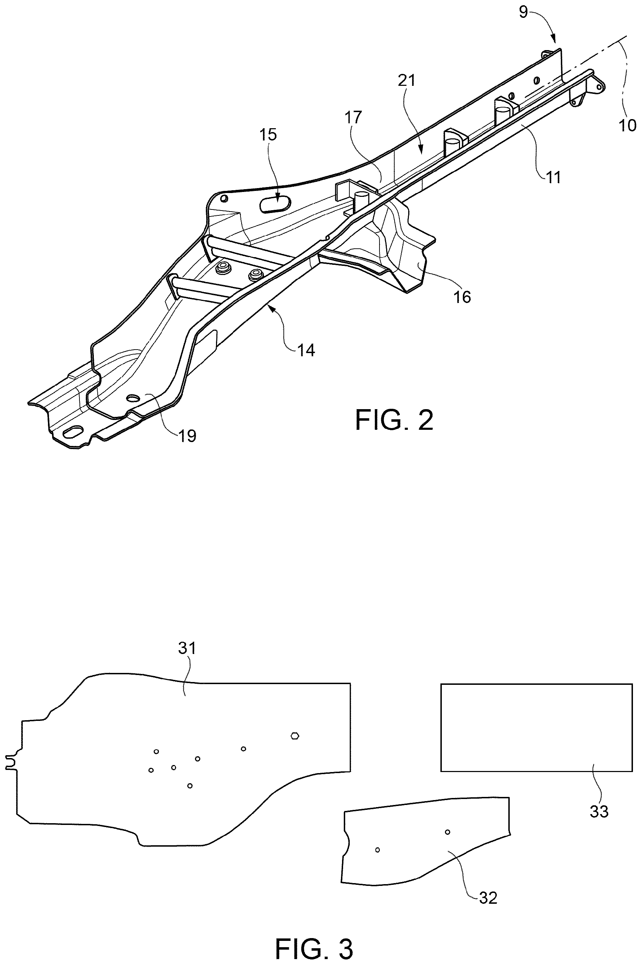

With reference to figure 2, the side members 9 also comprise respective front segments 14 comprising, in turn, respective intermediate portions 15, which are arranged at the sides of tank 5 and have a width which is variable along the axes 10 and, on average, is greater than the one of the segments 11.

The portions 15 are connected to each other by means of a cross member 16 (shown partly), which extends along a rear transversal edge of tank 5. In particular, the cross member 16 is arranged above said transversal edge.

The segments 14 also comprise respective portions 17, which join the portions 15 to the segments 11, and respective end portions 19, which protrude forward with respect to the front transversal edge of tank 5 and are connected to each other by means of a cross member 20 (fig. 1), which therefore is arranged in front of tank 5. Thereby, the portions 15 and the cross members 16 and 20 define a cell which substantially surrounds tank 5 to protect tank 5 in case of accident, in particular in case of rear impact.

Preferably, the cross members 16 and 20 are fixed by means of welding to the side members 9 and, advantageously, are the only two cross members of frame 3. In other words, frame 3 does not require additional cross members between the segments 11, under the trunk and/or close to the cross member 13.

As better explained hereinafter, the side members 9 are made starting from flat plates or sheets (fig. 3) which are welded and are then subjected to plastic deformation so as to give each side member 9 an open cross section, in particular a U-shaped cross section, and to thus obtain a concavity or longitudinal recess 21, which is preferably facing upward. The U-shaped section may be oriented differently, for example with a 90° rotation with respect to what disclosed.

In certain embodiments, recess 21 may be closed by a longitudinal wall (not shown), welded to the end wings of the U-shaped cross section, so as to provide the side member 9 with a closed cross section.

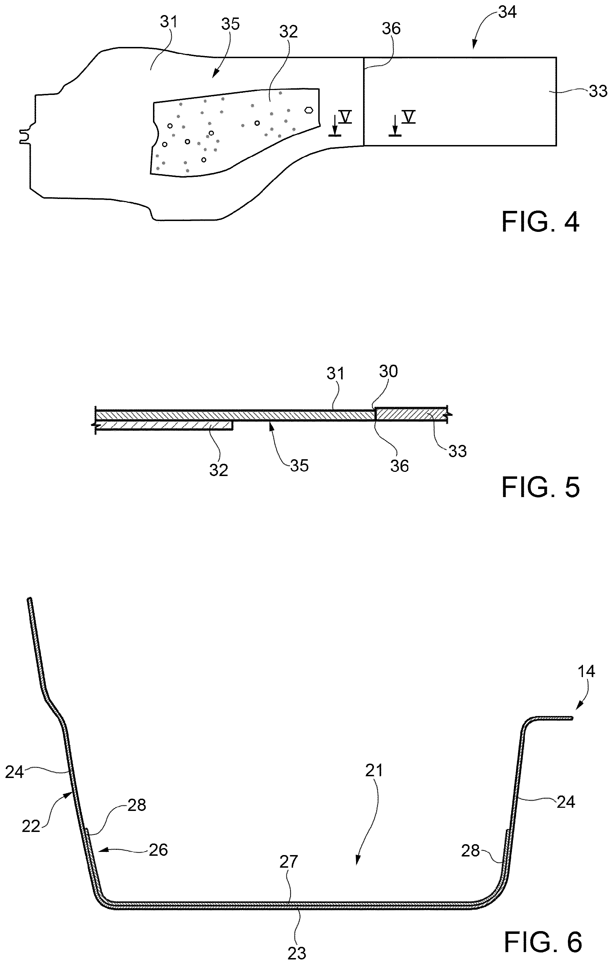

As shown in figure 6, each segment 14 comprises a wall 22, which has constant thickness and extends for the entire cross section. Wall 22 comprises a base 23, preferably flat, and two wings 24, which are joined at the lateral edges of base 23, protrude in the same direction and, in particular, converge toward base 23 due to the plastic deformation process to which they have been subjected.

Each segment 14 further comprises a patch 26, that is a wall overlapping and fixed to wall 22, so as to thicken portion 15 and therefore define a localized hardening or reinforcement. In particular, patch 26 has a constant thickness equal to the one of wall 22.

Patch 26 is arranged within recess 21 and comprises: an intermediate portion 27, which wholly covers base 23, and two wings 28, which are joined to portion 27 and cover only a lower area of the wings 24.

Advantageously, patch 26 is made of the same material as wall 22. Preferably, wall 22 is made of a steel having an ultimate tensile stress at least equal to 1500 MPa. Due to such a material, the quantity of reinforcing elements to be welded to the side member 9 after the plastic deformation is less with respect to the known art, with subsequent decrease in weight.

Advantageously, the steel used to make wall 22 is a boron steel, which is subjected to a hot pressing operation during the manufacturing method. The hot pressing temperature must be such as to cause such a steel to change from a ferritic structure to an austenitic structure (e.g. a temperature of approximately 900 °C). As also explained hereinafter, the pressing is followed by a cooling operation such as to harden the steel of wall 22, that is such as to cause such a steel to take on martensitic structure, in order to obtain a relatively high final rigidity.

For example, wall 22 is made of 22MNB5 AS150 UNI EN 10327 steel, with a thickness, e.g., of 1.5 mm.

According to a further aspect of the present invention, the segments 11 are defined by a plate which is made of a different material and/or has a different thickness than wall 22, so as to obtain an increased deformability in case of longitudinal load and, therefore, so as to define a collapsible segment with high energy absorption with respect to the portions 15, in case of rear impact.

In particular, the plate of the segments 11 is made of a material having a lower ultimate tensile stress than the one of wall 22, and has a larger thickness than the one of wall 22.

Advantageously, the steel with which segments 11 are manufactured is not boron, it has a ferritic structure, but it has features such as not to be hardened (that is, it does not take on martensitic structure) during the cooling operation mentioned above. Thus, at the end of the manufacturing method, the segments 11 remain less rigid with respect to the segments 14 to effectively absorb the energy due to the impact, thus being deformed.

For example, the plate of the segments 11 is made of HX340LAD AS150 steel with a thickness, e.g., of 1.6 mm.

As shown in figure 5, with such a difference in thickness, at the edge where they are joined, the segments 11 and the portions 17 form a step 30 on one of the two faces of the side member 9, and are flushed along the opposite face. Step 30 is formed at the face opposite to the one where patch 26 is arranged, in particular to properly perform a plastic deformation operation during the manufacturing process which is described hereinafter.

To manufacture the side member 9, as mentioned above, the method starts from three flat sheets or plates, indicated by numerals 31, 32 and 33 in figure 3. Sheet 31 will form wall 22 for the whole segment 14; sheet 32 will form patch 26 of portion 15; and sheet 33 will form segment 11.

With reference to figure 4, a flat blank 34 is first manufactured, by welding the sheets 32 and 33 to sheet 31. In particular, sheet 32 is rested on a face 35 of sheet 31, in an intermediate area which corresponds to the one planned in the project for patch 26, and is then point welded.

On the other hand, sheet 33 is aligned with sheet 31 along axis 10 and is then welded by means of laser welding, so as to join respective transversal end edges 36 of sheets 31, 33.

With reference to figure 5, as mentioned above, sheet 33 is arranged so as to be flushed with sheet 31 along face 35. On the opposite side, step 30 is formed between the edges 36, because of the difference in thickness between the sheets 31, 33.

As shown in figure 4, the edges 36 have respective profiles which are complementary to each other, for example they are rectilinear, so as to match perfectly. The sheets 31 and 33 have the same width at the edges 36, and their lateral edges remain flushed with each other without sudden variations in width after the welding.

With reference to figure 6, after having formed the flat blank 34, the latter is subjected to hot pressing, in particular it is drawn so as to obtain the required planned cross section for the side member 9 and so as to change the steel structure of sheet 31 and, preferably, of sheet 33, from ferritic to austenitic.

Thus, in this step, the sheets 31, 32, 33 are simultaneously plastically deformed so as to form the final cross section, shown in figure 6 and described above.

The cross section is balanced to favour pressing blank 34 and to prevent "tears" in the material in drawing step. In particular, the term "balanced" means that the area of face 35 where sheet 32 is superimposed, is centred as much as possible while considering a direction orthogonal to axis 10.

At the same time, the position of the welding points is defined in the project so as to allow a proper sliding of the plate during drawing. In particular, such a position is defined by means of drawing simulations carried out by means of suitable simulation software. In other words, the positions of the welding points are optimized so as to allow the optimal sliding of the plate within the mould and thus prevent excessive stretching of the material during the plastic deformation.

Thereby, there are several possibilities to manufacture an open cross section with the required shape.

As mentioned above, the pressing operation is followed by a cooling operation, such as to bring the structure of the steel of sheet 31 and, preferably, of sheet 32, from austenitic to martensitic, while the steel of sheet 33 does not take on martensitic structure.

Due to the features of the side member 9 and of the method for manufacturing it, the segments 11 are designed so as to have a relatively high deformability to absorb the impact energy in case of accident, while the portions 15 are designed so as to be relatively rigid to keep the protective cell about tank 5 substantially undeformed. At the same time, as they lack patch 26, the portions 17 provide an intermediate level of deformability between the segments 11 and the portions 15.

It is therefore apparent that the configuration of the side member 9 allows an excellent compromise to be obtained between rigidity and deformability of frame 3, in order to prevent damage to tank 5 and to the passenger compartment, during possible rear impact, as also proven by simulations carried out according to severe current legislation (rear impact at 80 km/h, in non-centred position with respect to the longitudinal advancing direction of vehicle 1).

At the same time, the configuration of the side member 9 allows the weight of frame 3 to be significantly reduced with respect to known solutions. Indeed, the addition of patch 26 and the selection of the materials of the segments 14 allow the rigidity to be increased, especially at the portions 15, so as to reduce the number of additional stiffening elements and/or eliminate additional cross members, which normally were provided in the known art.

Furthermore, the method of the present invention is relatively simple and at the same time allows increased design freedom in order to obtain the rigidity and the deformability required. In particular, in design step it is possible to establish the shape of the side member 9, the profile of the cross section, the thicknesses and the materials of the sheets 31, 32, 33, the overall shape of frame 3, etc. so as to respond in an optimal manner to the various requirements required by frame 3 (protection of tank 5, protection of the passenger compartment, absorption of the impact energy, overall volumes and weights, simplicity and small number of components, etc.).

In particular, the use of a multi-thickness blank allows the exact point to be defined in which differentiating the deforming behaviour of the side member, in order to optimize the behaviour of the entire vehicle during rear impact.

Furthermore, the method requires relatively simple starting parts, which outline may be shaped as required according to known technologies.

Concerning the rigidity of the frame, the wings 28 and the union thereof to portion 27 are extremely important, since they allow the load to be distributed, the stresses to be transferred onto the wings 24 and therefore the deformation criticalities to be prevented along the plane defined by portion 27 and by base 23. Thereby, it is not necessary to add any reinforcement, which in any case could not be welded at the union between the wings 24 and base 23, but only onto the wings 24, with subsequent loss of effectiveness and increased dimensions.

Patch 26 involves a minimum increase in weight, just as needed to obtain the strengthening required, since the extension of patch 26 is limited both in longitudinal and transverse direction. Again due to the limited extension of patch 26, the welding operations are simplified.

Finally, it is apparent from the above that modifications and variants may be made to the method and to the side member 9 herein described with reference to the accompanying drawings, without departing from the field of protection of the present invention, as defined in the appended claims.

In particular, the shape of the side members 9 and/or profile of the cross section thereof could be different from those illustrated by way of example.

Patch 26 could be more or less extended, with respect to that indicated by way of example.

## Claims

1. A method for manufacturing a rear frame side member of a vehicle, the method comprising the steps of:
- forming a flat blank (34):
a) by providing a plate comprising a front flat sheet (31) and a rear flat sheet (33) aligned with respect to each other along a longitudinal axis (10); said front and rear flat sheets (31, 33) being made of different materials so that said rear flat sheet (33) defines a rear segment of the side member (11) having higher deformability under strain with load directed along said longitudinal axis (10); said front (31) and rear (33) flat sheets being welded to each other along an edge which is transversal to said longitudinal axis (10) ;
b) by overlapping and welding a further flat sheet (32) onto an area of said front flat sheet (31);
- hot pressing said flat blank (34) so as to define a required cross section;
- cooling the side member obtained from the hot pressing; said front flat sheet (31) being made of a steel which is hardened by the cooling step;
**characterized in that**:
- said cross section is U-shaped so as to define a recess (21) which extends along said longitudinal axis (10); and
- following hot pressing, said further flat sheet (32) defines a patch (26), which is arranged within said recess (21) and comprises an intermediate portion (27) and two wings (28) joined to said intermediate portion (27) so as to also have a U-shaped cross section.

2. A method according to claim 1, **characterized in that** said front flat sheet (31) has a smaller thickness than the thickness of the rear flat sheet (33).

3. A method according to claim 1 or 2, **characterized in that** said front and rear flat sheets (31, 33) are flushed with each other along a face onto which said further flat sheet (32) is rested and welded.

4. A method according to any one of the preceding claims, **characterized in that** said rear flat sheet (33) is made of a steel which is not hardened by the cooling step.

5. A method according to any one of the preceding claims, **characterized in that** said steel of said front flat sheet (31) is a boron steel.

6. A method according to any one of the preceding claims, **characterized in that** said further flat sheet (32) is made of the same steel and has the same thickness as said front flat sheet (31).

7. A method according to any one of the preceding claims, **characterized in that** the steel of said front flat sheet (31) has an ultimate tensile stress at least equal to 1500 MPa.

8. A method according to any one of the preceding claims, **characterized in that** said further flat sheet (32) is superimposed on said front flat sheet (31) in a position which is essentially central along a direction orthogonal to said longitudinal axis (10) .

9. A rear frame side member of a vehicle, made according to the method of any one of the preceding claims, and
**characterized by** comprising:
- a rear segment (11) formed by said rear flat sheet (33) and adapted to support a bumper;
- a front segment (14) formed by said front flat sheet and said further flat sheet (31, 32) and comprising:
a) an intermediate portion (15) adapted to be arranged by the side of the fuel tank (5) of said vehicle and reinforced by said further flat sheet (32);
b) a union portion (17) which joins said intermediate portion (15) to said rear segment (11); and
c) a front end portion (19).

10. A rear frame side member according to claim 9, **characterized in that** said union portions (17) and said front end portion are free from said patch (26).

11. A vehicle comprising a fuel tank, a rear bumper and a rear frame, comprising:
- two rear frame side members (9), made according to claim 9 or 10;
- a first cross member (20) which connects said front end portions (19) to each other and is arranged along a front edge of said tank (5);
- a second cross member (16) which connects said intermediate portions (15) to each other and is arranged along a rear edge of said tank (5).

12. A vehicle according to claim 11, **characterized in that** said first and second cross members (16, 20) are the only two cross members of said rear frame (3).

## Patentansprüche

1. Verfahren zur Herstellung eines hinteren Rahmenseitenteils eines Fahrzeugs, wobei das Verfahren die folgenden Schritte umfasst:
- Bilden eines flachen Rohling (34):
a) durch Bereitstellen einer Platte, die ein vorderes flaches Blech (31) und ein hinteres flaches Blech (33) umfasst, die in Bezug aufeinander entlang einer Längsachse (10) ausgerichtet sind; wobei das vordere und das hintere flache Blech (31, 33) aus unterschiedlichen Materialien hergestellt sind, so dass das hintere flache Blech (33) ein hinteres Segment des Seitenteils (11) definiert, das unter einer entlang der Längsachse (10) gerichteten Belastung eine höhere Verformbarkeit aufweist; wobei das vordere (31) und das hintere (33) flache Blech entlang einer Kante, die quer zu der Längsachse (10) verläuft, miteinander verschweißt sind;
b) durch Überlappen und Verschweißen eines weiteren flachen Blechs (32) auf einen Bereich des vorderen flachen Blechs (31);
- Heißpressen des flachen Rohlings (34) dergestalt, dass ein gewünschter Querschnitt definiert wird;
- Abkühlen des durch das Heißpressen erhaltenen Seitenelements;
wobei das vordere flache Blech (31) aus einem Stahl hergestellt ist, der durch den Abkühlungsschritt gehärtet wird;
**dadurch gekennzeichnet, dass**:
- der Querschnitt U-förmig ist, dergestalt, dass er eine Aussparung (21) definiert, die sich entlang der Längsachse (10) erstreckt; und
- das weitere flache Blech (32) nach dem Heißpressen einen Bereich (26) definiert, der innerhalb der Ausnehmung (21) angeordnet ist und einen Zwischenabschnitt (27) und zwei Flügel (28) umfasst, die mit dem Zwischenabschnitt (27) so verbunden sind, dass sie ebenfalls einen U-förmigen Querschnitt aufweisen.

2. Verfahren nach Anspruch 1, **dadurch gekennzeichnet, dass** das vordere flache Blech (31) eine geringere Dicke aufweist als das hintere flache Blech (33).

3. Verfahren nach Anspruch 1 oder 2, **dadurch gekennzeichnet, dass** das vordere und das hintere flache Blech (31, 33) entlang einer Fläche, auf die das weitere flache Blech (32) gelegt und verschweißt wird, miteinander fluchten.

4. Verfahren nach einem der vorangehenden Ansprüche, **dadurch gekennzeichnet, dass** das hintere flache Blech (33) aus einem Stahl hergestellt ist, der durch den Abkühlungsschritt nicht gehärtet wird.

5. Verfahren nach einem der vorangehenden Ansprüche, **dadurch gekennzeichnet, dass** der Stahl des vorderen flachen Blechs (31) ein Borstahl ist.

6. Verfahren nach einem der vorangehenden Ansprüche, **dadurch gekennzeichnet, dass** das weitere flache Blech (32) aus dem gleichen Stahl hergestellt ist und die gleiche Dicke aufweist wie das vordere flache Blech (31) .

7. Verfahren nach einem der vorangehenden Ansprüche, **dadurch gekennzeichnet, dass** der Stahl des vorderen flachen Blechs (31) eine Zugfestigkeit von mindestens 1500 MPa aufweist.

8. Verfahren nach einem der vorangehenden Ansprüche, **dadurch gekennzeichnet, dass** das weitere flache Blech (32) an einer Position, die im Wesentlichen mittig entlang einer Richtung orthogonal zu der Längsachse (10) liegt, auf das vordere flache Blech (31) gelegt wird.

9. Hinteres Rahmenseitenelement eines Fahrzeugs, das gemäß dem Verfahren nach einem der vorangehenden Ansprüche hergestellt wird, und
**dadurch gekennzeichnet, dass** es umfasst:
- ein hinteres Segment (11), das durch das hintere flache Blech (33) gebildet wird und dafür ausgelegt ist, einen Stoßfänger zu stützen;
- ein vorderes Segment (14), das durch das vordere flache Blech und das weitere flache Blech (31, 32) gebildet wird und umfasst:
a) einen Zwischenabschnitt (15), der dafür ausgelegt ist, an der Seite des Kraftstofftanks (5) des Fahrzeugs angeordnet zu werden, und durch das weitere flache Blech (32) verstärkt wird;
b) einen Verbindungsabschnitt (17), der den Zwischenabschnitt (15) mit dem hinteren Segment (11) verbindet; und
c) einen Vorderendabschnitt (19).

10. Hinteres Rahmenseitenelement nach Anspruch 9, **dadurch gekennzeichnet, dass** die Verbindungsabschnitte (17) und der Vorderendabschnitt frei von dem Bereich (26) sind.

11. Fahrzeug, das einen Kraftstofftank, einem hinteren Stoßfänger und einem hinteren Rahmen umfasst, und das umfasst:
- zwei hintere Rahmenseitenelemente (9), die nach Anspruch 9 oder 10 hergestellt sind;
- ein erstes Querelement (20), das die Vorderendabschnitte (19) miteinander verbindet und entlang einer Vorderkante des Tanks (5) angeordnet ist;
- ein zweites Querelement (16), das die Zwischenabschnitte (15) miteinander verbindet und entlang einer Hinterkante des Tanks (5) angeordnet ist.

12. Fahrzeug nach Anspruch 11, **dadurch gekennzeichnet, dass** das erste und das zweite Querelement (16, 20) die einzigen beiden Querelemente des hinteren Rahmens (3) sind.

## Revendications

1. Procédé de fabrication d'un élément latéral de châssis arrière d'un véhicule, le procédé comprenant les étapes consistant à :
- former une ébauche plate (34) :
a) en fournissant une plaque comprenant une feuille plate avant (31) et une feuille plate arrière (33) alignées l'une par rapport à l'autre le long d'un axe longitudinal (10) ; lesdites feuilles plates avant et arrière (31, 33) étant composées de matériaux différents de telle sorte que ladite feuille plate arrière (33) définit un segment arrière de l'élément latéral (11) présentant une aptitude à la déformation plus élevée sous contrainte avec une charge dirigée le long dudit axe longitudinal (10) ; lesdites feuilles plates avant (31) et arrière (33) étant soudées l'une à l'autre le long d'un bord qui est transversal audit axe longitudinal (10) ;
b) en faisant se chevaucher et en soudant une autre feuille plate (32) sur une zone de ladite feuille plate avant (31) ;
- presser à chaud ladite ébauche plate (34) de manière à définir une coupe requise ;
- refroidir l'élément latéral obtenu à partir du pressage à chaud ;
ladite feuille plate avant (31) étant composée d'un acier qui est durci par l'étape de durcissement ;
**caractérisé en ce que** :
- ladite coupe est en forme de U de manière à définir un évidement (21) qui s'étend le long dudit axe longitudinal (10) ; et
- à la suite du pressage à chaud, ladite autre feuille plate (32) définit un patch (26), qui est agencé dans ledit évidement (21) et comprend une partie intermédiaire (27) et deux ailes (28) jointes à ladite partie intermédiaire (27) de manière à présenter également une coupe en forme de U.

2. Procédé selon la revendication 1, **caractérisé en ce que** ladite feuille plate avant (31) présente une épaisseur plus petite que l'épaisseur de la feuille plate arrière (33).

3. Procédé selon la revendication 1 ou 2, **caractérisé en ce que** lesdites feuilles plates avant et arrière (31, 33) sont au même niveau l'une que l'autre le long d'une face sur laquelle ladite autre feuille plate (32) s'appuie et est soudée.

4. Procédé selon l'une quelconque des revendications précédentes, **caractérisé en ce que** ladite feuille plate arrière (33) est composée d'un acier qui n'est pas durci par l'étape de refroidissement.

5. Procédé selon l'une quelconque des revendications précédentes, **caractérisé en ce que** ledit acier de ladite feuille plate avant (31) est un acier au bore.

6. Procédé selon l'une quelconque des revendications précédentes, **caractérisé en ce que** ladite autre feuille plate (32) est composée du même acier et présente la même épaisseur que ladite feuille plate avant (31).

7. Procédé selon l'une quelconque des revendications précédentes, **caractérisé en ce que** l'acier de ladite feuille plate avant (31) présente une contrainte ultime de traction au moins égale à 1500 MPa.

8. Procédé selon l'une quelconque des revendications précédentes, **caractérisé en ce que** ladite autre feuille plate (32) est superposée sur ladite feuille plate avant (31) dans une position qui est essentiellement centrale le long d'une direction orthogonale audit axe longitudinal (10).

9. Élément latéral de châssis arrière d'un véhicule, créé selon le procédé de l'une quelconque des revendications précédentes, et
**caractérisé en ce qu'**il comprend :
- un segment arrière (11) formé par ladite feuille plate arrière (33) et adapté pour supporter un pare-chocs ;
- un segment avant (14) formé par ladite feuille plate avant et ladite autre feuille plate (31, 32) et comprenant :
a) une partie intermédiaire (15) adaptée pour être agencée par le côté du réservoir de carburant (5) dudit véhicule et renforcée par ladite autre feuille plate (32) ;
b) une partie d'union (17) qui joint ladite partie intermédiaire (15) audit segment arrière (11) ; et
c) une partie d'extrémité avant (19).

10. Élément latéral de châssis arrière selon la revendication 9, **caractérisé en ce que** lesdites parties d'union (17) et ladite partie d'extrémité avant sont dépourvues dudit patch (26).

11. Véhicule comprenant un réservoir de carburant, un pare-chocs arrière et un châssis arrière, comprenant :
- deux éléments latéraux de châssis arrière (9), créés selon la revendication 9 ou 10 ;
- une première traverse (20) qui relie lesdites parties d'extrémité avant (19) l'une à l'autre et est agencée le long d'un bord avant dudit réservoir (5) ;
- une seconde traverse (16) qui relie lesdites parties intermédiaires (15) l'une à l'autre et est agencée le long d'un bord arrière dudit réservoir (5).

12. Véhicule selon la revendication 11, **caractérisé en ce que** lesdites première et seconde traverses (16, 20) sont les deux seules traverses dudit châssis arrière (3).
